# EUROPÄISCHE PATENTSCHRIFT

(11) **EP 1 690 606 B1**
(45) Veröffentlichungstag und Bekanntmachung des Hinweises auf die Patenterteilung: **08.10.2008**
(21) Anmeldenummer: 06101153.2
(22) Anmeldetag: 01.02.2006
(51) Int. Cl.: B21B 1/38

(54) **Verfahren zum Herstellen von walzplattiertem Warmband zur Weiterverarbeitung zu Kaltband**
Method for the manufacture of hot strip clad by rolling for further processing into cold strip
Procédé de fabrication d'une bande à chaud laminée par plaçage pour transformation en bande à froid

(30) Priorität: 11.02.2005 DE 102005006606
(43) Veröffentlichungstag der Anmeldung: 16.08.2006
(73) Patentinhaber: ThyssenKrupp Steel AG, 47166 Duisburg (DE)
(72) Erfinder: Becker, Jens-Ulrik, 47058 Duisburg (DE); Friedrich, Karl Ernst, 47447 Moers (DE); Tamler, Horst Walter, 58453 Witten (DE); Wunderlich, Roland, 44534 Lünen (DE)
(74) Vertreter: Cohausz & Florack

(56) Entgegenhaltungen:
- FR-A- 2 323 492
- JP-A- 54 024 260
- PATENT ABSTRACTS OF JAPAN Bd. 005, Nr. 206 (M-104), 26. Dezember 1981 (1981-12-26) -& JP 56 122681 A (JAPAN STEEL WORKS LTD:THE), 26. September 1981 (1981-09-26)
- PATENT ABSTRACTS OF JAPAN Bd. 015, Nr. 006 (M-1066), 8. Januar 1991 (1991-01-08) -& JP 02 258112 A (MITSUBISHI METAL CORP), 18. Oktober 1990 (1990-10-18)
- PATENT ABSTRACTS OF JAPAN Bd. 016, Nr. 302 (M-1275), 3. Juli 1992 (1992-07-03) -& JP 04 084682 A (SUMITOMO METAL IND LTD), 17. März 1992 (1992-03-17)
- PATENT ABSTRACTS OF JAPAN Bd. 014, Nr. 186 (M-0962), 16. April 1990 (1990-04-16) -& JP 02 034205 A (HITACHI CABLE LTD), 5. Februar 1990 (1990-02-05)

## Beschreibung

Die Erfindung betrifft ein Verfahren zum Herstellen von walzplattiertem Warmband zur Weiterverarbeitung zu Kaltband.

Plattierte Stahlbänder werden eingesetzt, wenn Stahlmaterialen mit Eigenschaftskombinationen benötigt werden, die sich mit einem einzigen Werkstoff nicht oder nur unvollkommen gewährleisten lassen. So werden von den Anwendern mehrschichtige Warm- und Kaltbänder gefordert, die widersprechende Eigenschaften, wie eine besonders hohe Verschleißfestigkeit der Oberflächen bei gleichzeitig guter Verformbarkeit, besitzen sollen. Diese Anforderungen können beispielsweise dadurch erfüllt werden, dass auf einen gut verformbaren, jedoch nur gering verschleißfesten Grundwerkstoff mindestens einseitig eine dünne Lage eines Stahlwerkstoffs aufgebracht wird, der zwar schlechtere Verformbarkeitswerte, dafür jedoch eine besonders gute Verschleißfestigkeit aufweist. Ebenso können beispielsweise Kombinationen von hochfesten, jedoch korrosionsanfälligen, mit weniger festen, jedoch besonders korrosionsbeständigen Stählen gebildet werden.

Es sind verschiedene Verfahren zum Herstellen von aus mindestens zwei Lagen gebildeten walzplattierten Blechen bekannt. Gemäß einem ersten in der EP 0 004 063 B1 beschriebenen Verfahren wird zur Herstellung von 100 mm bis 300 mm betragenden plattierten Blechen durch Walzschweißplattieren eines evakuierten, sandwichartig aus Grund- und Auflagewerkstoff gebildeten ein- oder zweiseitigen Plattierpaket dieses Plattierpaket rundum von einem Schweißrahmen abgedichtet. Die Grundwerkstoffplatine und die darauf liegende Auflagewerkstoffplatte werden dann ab den miteinander zur Anlage gelangenden Seiten spanabhebend, vorzugsweise durch Hobeln oder Bandschleifen, planbearbeitet. Dabei wird gemäß dem bekannten Verfahren vor dem Verschweißen des Plattierpakets ein die Auflagewerkstoffplatte peripher umgebender Hilfsrahmen eingesetzt, dessen Höhe beim zweiseitigen Plattierpaket der Höhe der Auflagewerkstoffplatten der übereinander liegenden Auflagewerkstoffplatten und beim einseitigen Plattierpaket der Höhe einer Auflagewerkstoffplatte entspricht. Zwischen dem Schweißrahmen und dem Hilfsrahmen wird ein Luftspalt freigelassen. Das Walzschweißen findet dann unter Anwendung eines Gesamtverformungsgrades von weniger als 50 % vorzugsweise weniger als 30 % in maximal fünf Walzstichen statt.

Mit der voranstehend erläuterten Vorgehensweise lassen sich zwar dicke plattierte Bleche erzeugen, jedoch keine dünnen, zu Kaltband weiterverarbeitbare Bänder. Zudem ist dazu ein sowohl technisch als auch kostenmäßig aufwändiges Verfahren erforderlich, bei dem unter anderem ein Hilfsrahmen eingesetzt wird, der während des Warmwalzens mitverformt und als solcher verloren geht.

Ein anderes Verfahren zum Herstellen von walzplattierten Bändern ist aus der EP 0 201 202 B1 bekannt. Gemäß diesem bekannten Verfahren werden ein Grundmaterial, ein Plattierungsmaterial und ein Abdeckmaterial nach dem Reinigen der ihrer einander zugeordneten Verbindungsoberflächen einander überlagert, um eine Mehrschichtstruktur zu bilden. Anschließend wird das Abdeckmaterial entlang der Peripherie des gebildeten Stapels verschweißt, so dass das Plattierungsmaterial zwischen dem Abdeckmaterial und dem Grundmaterial abgedichtet und fixiert wird. Bei dem so erhaltenen mehrschichtigen Aufbau wird die Außenoberfläche des Abdeckmaterials durch ein Trennmittel mit einem Material zur Verhinderung der Verwerfung bedeckt. Auch dieses Material wird dann durch Verschweißung entlang der Peripherie des mehrschichtigen Aufbaus mit dem Grundmaterial verbunden, so dass ein zum Walzen geeigneter Formling erhalten wird. Dieser Formling wird dann zu einem plattierten Warmband warmgewalzt. Anschließend wird das so genannte "Mittel zur Verhinderung der Verwerfungen" von dem erhaltenen Warmband abgetrennt. Dazu wird das Warmband zunächst an seiner Peripherie besäumt. Anschließend wird das Mittel mechanisch und/oder elektrolytisch/chemisch von der Oberfläche des Warmbands entfernt. Die Dicke der auf diese Weise erhaltenen Bänder liegt im Bereich von 50 mm. Auch diese Warmbänder lassen sich nur unter Schwierigkeiten zu Kaltband verarbeiten, das eine für einige bestimmte Anwendungen aus dem Maschinen- oder Automobilbereich interessante Dicke besitzt. Darüber hinaus macht die Vielzahl von Schritten, die gemäß dem bekannten Verfahren erforderlich sind, um ein weitgehend verwerfungsfreies Produkt zu erhalten, auch dieses Verfahren technisch aufwändig und teuer. Um in den zur Erzeugung von Kaltband geeigneten Warmbanddickenbereich zu gelangen, wäre eine weitere Warmumformung erforderlich. Da jedoch davon ausgegangen werden kann, dass das "Mittel zur Verhinderung von Verwerfungen" einer solchen Behandlung nicht stand hält, könnte der nächste Umformschritt erst im Anschluss an die Trennung der einzelnen Paketkomponenten und eine erneute Erwärmung des Walzguts stattfinden, was wiederum einen erhöhten Prozess- und Kostenaufwand mit sich zöge.

Gerade im Bereich dünnerer walzplattierter Bleche liegt im Vergleich zum Grobblechbereich ein besonders starker Bedarf vor. Diese werden in großen Stückzahlen beispielsweise für die Herstellung von tiefgezogenen Bauelementen, wie Wälzlager oder Motorenteile, benötigt (DE 41 37 118 A1). Die Praxis zeigt jedoch, dass die bekannten Verfahren so kostenträchtig und umständlich sind, dass eine wirtschaftliche Vermarktung von aus solchen Blechen erzeugten Bauelementen trotz des hohen Bedarfs nur schwer möglich ist.

Darüber hinaus ist eine ganze Gruppe von Patenten (z. B.: DE 100 11 758 C2) bekannt, die darauf basieren, dass mindestens ein Verbundpartner in Form einer flüssigen Schmelze vorliegt. Auch diese Verfahren sind sehr aufwändig und diffizil. Aus vom Zwei-Rollen-Gießverfahren herrührenden Erkenntnissen ist bekannt, dass bei dem Verfahren gemäß DE 100 11 758 C2 z. B. bestimmte Anforderungen an die Rauhigkeit der Trägerbänder gestellt werden müssen.

Das Walzplattieren von Bändern ist auch aus dem Bereich des Kaltwalzens bekannt. Die besonderen Nachteile sind hier, dass sich das Verfahren ausschließlich auf geringe Abmessungen im Bereich von wenigen mm bezieht, dass beim Plattieren ein bestimmter Mindestumformgrad von etwa 60 - 70 % eingehalten werden muss, um eine Verbindung zu erzielen, und dass dem Kaltwalzen eine Glühbehandlung angeschlossen werden muss, um durch Diffusionsprozesse einen hinreichend guten Verbund zu erzeugen.

Ein die Gattung der vorliegenden Erfindung beschreibendes Verfahren, das es erlaubt, mit deutlich vermindertem Aufwand kostengünstig aus mindestens zwei Stahlblechen hergestellte Warmbänder zu erzeugen, geht aus der FR-A-2 323 492 hervor. Bei diesem Stand der Technik werden im ersten Schritt mindestens zwei im Wesentlichen quaderförmige Platten aus einem Stahlmaterial gefertigt. Die einander zugewandten Oberflächen dieser Platten werden dann einer abtragenden Oberflächenbehandlung unterzogen. Ziel ist es dabei, sie derart aneinander anzupassen, dass die beiden Oberflächen bei aufeinander liegenden Platten im Wesentlichen dicht aufeinander liegen. Unterstützt werden kann dies dadurch, dass die betreffenden Oberflächen von unerwünschten Fremdpartikeln befreit und chemisch-physikalisch aktiviert werden. Die derart vorbereiteten Platten werden dann mit ihren oberflächenbehandelten Oberflächen aufeinander gelegt und zu einem Plattenpaket verschweißt. Daraufhin wird das Plattenpaket auf eine Warmwalztemperatur erhitzt, zu einem coilfähigen, walzplattierten Warmband warmgewalzt und zu einem Coil gehaspelt. Trotz der bei dieser Vorgehensweise erzielten Verbesserung der Produktivität zeigt sich in der Praxis das Problem, dass im Bereich der Kanten der in der bekannten Weise erzeugten Warmbänder Risse und Versprödungen vorliegen, die eine Weiterverarbeitung erschweren und die Produktqualität herabsetzen.

Neben dem voranstehend erläuterten Stand der Technik ist aus der JP 56-122681 A ein Verfahren zum Walzplattieren eines Stahlbands mit einem Titanblech bekannt, bei dem ein Stahl-Basismaterial nach einer geeigneten Vorbereitung mit dem Ti-Blech belegt und anschließend mit dem auf ihm liegenden Ti-Blech verschweißt wird. Das so gebildete Paket wird dann auf eine Temperatur von 800 bis 900 °C erhitzt und abschließend warmgewalzt.

Aus der JP 54-024260 A ist ebenfalls ein Walzplattieren zweier Bänder bekannt. Diese werden jeweils von Coils abgehaspelt und nach einem zumindest einstufigen Walzstich zu dem walzplattierten Band geformt, das dann wiederum zu einem Coil aufgehaspelt wird.

Aus der JP 04-084682 A kennt der Fachmann zudem ein Verfahren zum Herstellen eines walzplattierten Warmbands, das aus zwei weichen und zwei verformungswiderstandsfähigen Werkstoffen gebildet wird, wobei die Werkstoffe miteinander stoffschlüssig verbunden werden. Die Dicke der verformungswiderstandsfähigen Werkstoffe wird in den Walzstichen im Wesentlichen beibehalten, während der weichere Werkstoff eine deutliche Dickenreduzierung erfährt.

In der JP 02 034205 A ist schließlich eine Möglichkeit des Walzplattierens von Aluminium mit einem rostfreien Stahl durch Kaltwalzen zu entnehmen. Der Aluminiumwerkstoff wird dabei mit dem Stahlwerkstoff im Hochvakuum verschweißt.

Vor dem Hintergrund des voranstehend erläuterten Standes der Technik bestand die Aufgabe der Erfindung darin, ein Verfahren zu schaffen, das es erlaubt, walzplattierte Warmbänder auch aus solchen Stahlsorten herzustellen, bei denen die Gefahr einer Versprödung oder Rissbildung besteht.

Diese Aufgabe ist erfindungsgemäß durch ein Verfahren mit den im Anspruch 1 angegebenen Merkmalen gelöst worden.

Vorteilhafte Ausgestaltungen dieses Verfahrens sind in den abhängigen Ansprüchen angegeben.

Mit der Erfindung steht ein Verfahren zu Verfügung, das es ermöglicht, ein coilfähiges und unmittelbar anschließend ohne weiteren Bearbeitungsschritt vom Coil zu Kaltband verarbeitbares Warmband zu schaffen. Dieses Warmband besteht aus mindestens zwei Komponenten, von denen die erste einen Grundwerkstoff bildet, auf den die zweite Lage aufgelegt wird.

Als Ausgangsmaterial für die erfindungsgemäße Erzeugung von walzplattiertem Blech werden quaderförmige Platten eingesetzt, die beispielsweise durch Vorblocken oder durch Vorwalzen von Brammen hergestellt worden sind. Auch ist es denkbar, als Plattenmaterial direkt Brammen von größerer Dicke zu verwenden, wenn dies die zur Verfügung stehende Walzmaschinerie zulässt. Die aufeinander gelegten Platten weisen jeweils unterschiedliche Werkstoffeigenschaften auf, wobei die Abfolge der Platten in einem Plattenpaket selbstverständlich so organisiert sein kann, dass in einem Plattenpaket zwei oder mehr Platten gleicher Art vorhanden sein können. Dies ist beispielsweise dann der Fall, wenn in erfindungsgemäßer Weise ein dreilagiges Band erzeugt werden soll, bei dem die auf ein Grundmaterial aufgetragenen Außenlagen jeweils aus demselben Material bestehen.

Ein wesentlicher Aspekt der Erfindung ist, dass die im aufeinander gelegten Zustand einander zugeordneten Oberflächen der Platten vor dem Aufeinanderlegen einer abtragenden Oberflächenbehandlung unterzogen werden, um die Oberflächenform der einen Platte an die Oberflächenform der anderen Platte derart anzupassen, dass die beiden Oberflächen bei aufeinander liegenden Platten im Wesentlichen dicht aufeinander liegen. Auf diese Weise wird darüber hinaus gewährleistet, dass Zunder und andere den Warmwalzverschweißprozess behindernde Partikel von den aufeinander zu legenden Flächen entfernt sind und dass das zwischen den Platten eingeschlossene Luftvolumen nach dem Zusammenfügen der Platten auf ein Minimum reduziert ist und die Oberflächen derart chemisch-physikalisch aktiviert sind, dass adhäsive Bindungskräfte beim Verbindungsprozess optimal zur Wirkung kommen können. Die abtragende Bearbeitung der Plattenoberflächen kann dabei dadurch erfolgen, dass die Oberflächen der Platten zum Entfernen von Zunder gebeizt oder zum Entfernen von losen oder schwach haftenden Partikeln gebürstet oder kugelgestrahlt werden. Alternativ oder ergänzend dazu kann die abtragende Bearbeitung der Oberflächen auch spanabhebend, beispielsweise durch Schleifen, erfolgen. Dabei ergibt sich eine besonders klare Aufteilung der Zonen des erfindungsgemäß erhaltenen walzplattierten Warmbands bei gleichzeitig einfacher Handhabbarkeit dann, wenn die Platten durch die abtragende Oberflächenbehandlung im Wesentlichen plane Oberflächen erhalten.

Nachdem die Platten möglichst weitgehend dicht und mit möglichst vollflächigem Kontakt aufeinander liegen, wird die relative Lage der Platten durch Verschweißen fixiert. Ein weitestgehender Ausschluss von Lufteinschlüssen zwischen den Platten kann dabei dadurch unterstützt werden, dass die aufeinander liegenden Platten des Plattenpakets vor und während des Schweißens gegeneinander gepresst werden. Auf diese Weise werden eventuell zuvor noch zwischen den Platten vorhandene Gase, insbesondere Luft, vertrieben, so dass im Zuge des Warmwalzens die Erzeugung einer vollflächigen, optimalen Verbindung zwischen den jeweiligen Fügepartnern gewährleistet ist.

Die Verschweißung wird bevorzugt so ausgeführt, dass die Platten des Plattenpakets gasdicht miteinander verschweißt sind. Dies hat den Vorteil, dass auch im Nachhinein, beispielsweise als Folge eines Verzugs der Platten bei ihrem Transport, keine Luft oder andere störenden Gase zwischen die Platten des Plattenpakets geraten können.

Überraschend hat sich in diesem Zusammenhang herausgestellt, dass es bei ausreichender erfindungsgemäßer Vorbereitung der Oberflächen und unterstützt durch das Aufeinanderpressen der Platten nicht mehr erforderlich ist, wie beim Stand der Technik nach dem Verschweißen der Platten die Zwischenschicht zu evakuieren. Stattdessen ergeben sich bereits optimale Verarbeitungsergebnisse, wenn die Platten, ggf. unterstützt durch geeignet aufgebrachte Presskräfte, aufgrund ihrer abtragenden Vorbehandlung dicht aufeinander liegen.

Das Verschweißen der miteinander zu verbindenden Platten kann dadurch vereinfacht werden, dass die Ränder der einander zugeordneten Oberflächen der Platten mindestens im Bereich der Abschnitte angefast werden, in denen anschließend die Verschweißung erfolgt.

Indem das Plattenpaket vor dem Verschweißen erfindungsgemäß auf eine Schweiß-Vorwärmtemperatur erwärmt wird, wird bei der Verarbeitung von Stählen, die andernfalls nach Einwirkung der Schweißhitze zu einer durch Wasserstoff verursachten Versprödung und damit zur Rissbildung neigen, die Gefahr der Entstehung solcher Risse vermieden. Werden beispielsweise Platten aus schlecht schweißbaren Stählen verwendet, so kann es günstig sein, wenn in diesem Zusammenhang eine für die jeweilige Werkstoffkombination geeignete Schweißvorwärmtemperatur gewählt wird.

Nach dem Schweißen wird das erfindungsgemäß erhaltene Plattenpaket auf eine Warmwalzanfangstemperatur erwärmt, die bevorzugt im für Stähle konventionellen Bereich von 1.100 C° bis 1.300°C liegt. Abhängig von den jeweils verarbeiteten Stahltypen kann der Bereich der Erwärmung bevorzugt bei 1.200 °C - 1.300 °C liegen.

Die erwärmten Plattenstapel werden anschließend warmgewalzt. Dabei werden die Plattenpakete zu einem Warmband mit einer Dicke gewalzt, die es ermöglicht, die erhaltenen Warmbänder zu einem Coil zu haspeln. Überraschend hat sich gezeigt, dass es trotz der über die Dicke der Plattenpakete aufgrund der unterschiedlichen Materiallagen höchst unterschiedlichen Eigenschaftsverteilung möglich ist, walzplattierte Warmbänder mit Dicken herzustellen, die im Bereich von 6 mm bis hin zu geringstmöglichen Dicken liegen.

Derartig dünne Bänder lassen sich nicht nur zu einem Coil wickeln, sondern eignen sich aufgrund ihrer geringen Dicke auch zur kostengünstigen Herstellung von Bauelementen, wie Wälzlagergehäuse, Motorteile oder anderen im praktischen Einsatz verschleißbelasteten Teilen. Darüber hinaus sind an dieser Stelle sämtliche rost-, säure- und hitzebeständigen oder schussfeste Stähle oder Ni-Basis-Legierungen zu nennen. Das Verfahren kann allerdings für jegliche denkbaren Stahlkombinationen eingesetzt werden.

Mit der Erfindung lässt sich haspelbares Warmband erzeugen, das sich anschließend problemlos zu Kaltband weiterverarbeiten lässt, wozu in der Regel Warmbänder mit Dicken im Bereich von 6 mm und weniger benötigt werden.

Nachfolgend wird die Erfindung anhand einer ein Ausführungsbeispiel darstellenden Zeichnung näher erläutert. Es zeigen jeweils schematisch:

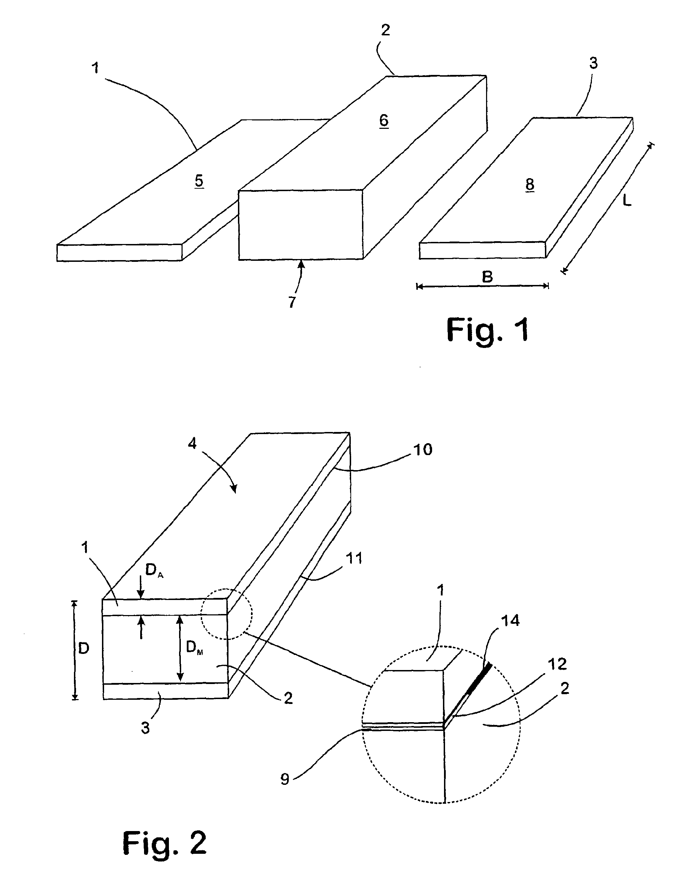

- Fig. 1: drei quaderförmige Platten in einer perspektivischen Ansicht;
- Fig. 2: ein aus den Platten gemäß Fig. 1 gebildetes Plattenpaket in perspektivischer Ansicht;

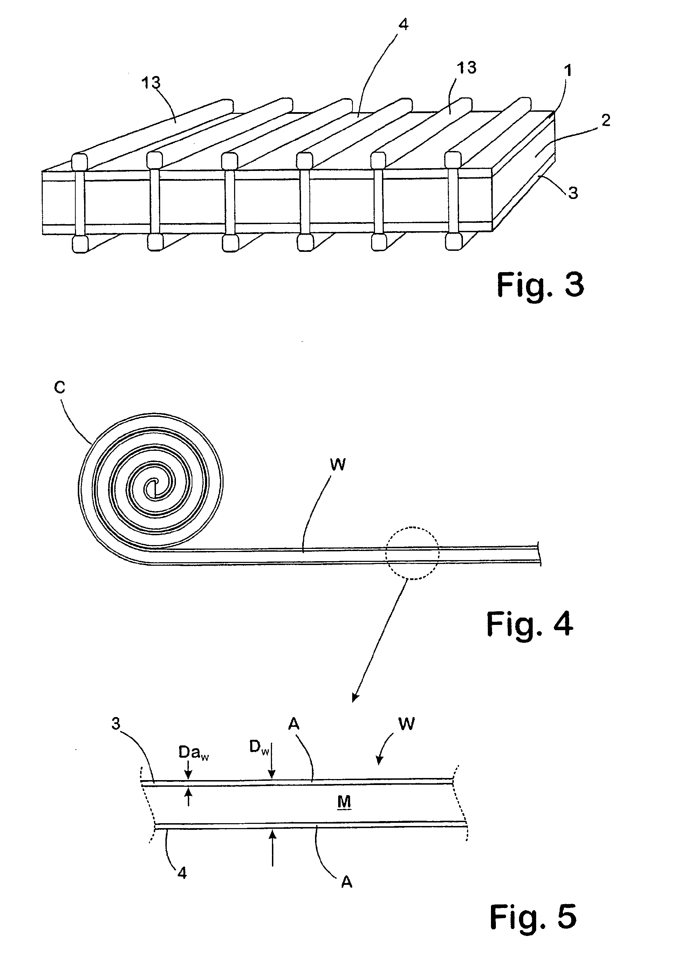

- Fig. 3: das Plattenpaket gemäß Fig. 2 in für das Schweißen vorbereitetem Zustand in einer seitlichen Ansicht;
- Fig. 4: ein aus dem Plattenpaket gemäß Fig. 2 gewalztes, zu einem Coil gewickeltes walzplattiertes Warmband in seitlicher perspektivischer Ansicht;
- Fig. 5: einen Ausschnitt des walzplattierten Warmbands gemäß Fig. 3 in einer vergrößerten Ansicht.

Zur Herstellung eines dreilagigen walzplattierten Warmbands W mit Außenlagen A aus einem verschleißfesten, 0,7 Gew.-% Kohlenstoff enthaltenden Stahl und einer zwischen den Außenlagen A angeordneten Mittellage M, die aus einem weichen, gut verformbaren Stahlwerkstoff mit 0,06 Gew.-% C erzeugt worden ist, sind drei Platten 1,2,3 gefertigt worden, von denen die beiden Platten 1,3 aus dem verschleißfesteren Stahl erzeugt sind, während die dritte Platte 2 aus dem weicheren Werkstoff besteht. Die Breite B der Platten 1,2,3 beträgt jeweils 980 mm und ihre Länge L 6.000 mm. Die Dicke D_{A} der Platten 1,3 beträgt jeweils 25 mm, während die Dicke D_{M} der Platte 2 200 mm beträgt.

Die Platten 1,3 bilden die beiden Außenlagen A eines aus den Platten 1,2,3 herzustellenden dreilagigen Plattenpakets 4. Bevor die Platten 1,2,3 zu dem Plattenstapel 4 zusammengelegt werden, werden die dabei zur Anlage aneinander kommenden Flächen 5,6,7 und 8 der Platten 1,2,3 abtragend bearbeitet. Dazu werden die Flächen 5,6,7,8 der Platten 1,2,3 zunächst gebeizt und gebürstet, um Zunder und lose oder nur schwach auf den Flächen 5,6,7,8 haftende Partikel zu entfernen. Anschließend werden die Flächen 5,6,7,8 geschliffen, um möglichst planebene Oberflächen zu erhalten. Zusätzlich werden die um die Flächen 5,6,7,8 umlaufenden Flächen der Platten 1,2,3 spanabhebend mit einer Anfasung 9 versehen.

Anschließend werden die Platten 1,2,3 aufeinander gelegt, so dass die Fläche 5 der Platte 1 auf der Fläche 6 der Platte 2 und die Fläche 7 der Platte 2 auf der Fläche 8 der Platte 3 liegen. Aufgrund der Planheit der Flächen 6,7,8,9 liegen die Platten 1,2,3 weitestgehend vollflächig dicht aufeinander auf. Die Gesamtdicke D des Plattenpakets 4 beträgt ca. 250 mm, wobei die Dicke D_{A} der außen liegenden Platten 1,2 jeweils 10 % der Gesamtdicke D einnimmt und der Rest D_{M} von 80 % der Dicke D auf die zwischen den Platten 1,3 angeordnete Platte 2 entfällt.

Durch die Anfasungen 9 der Platten 1,2,3 im Bereich der umlaufenden Fügenähte 10,11 ist dort jeweils eine umlaufende Kehle 12 gebildet.

Um sicherzustellen, dass der weitestgehend vollflächige Kontakt zwischen den Platten 1,2,3 erhalten bleibt und möglichst keine Luft zwischen die Platten 1,2,3 gerät, werden die Platten 1,2,3 nach dem Aufeinanderlegen durch Spannrahmen 13 gegeneinander verspannt. Auf diese Weise werden die Platten 1,2,3 gleichmäßig gegeneinander gedrückt und zwischen ihnen eventuell noch vorhandene Luft vertrieben.

Sofern gegenüber dem Schweißen rissempfindlich reagierende Stähle verarbeitet werden, so werden auf das derart verspannte Plattenpaket 4 induktiv arbeitende, hier nicht gezeigte Heizeinrichtungen gesetzt, die das Plattenpaket 4 auf eine Temperatur von beispielsweise 250 °C vorwärmen.

Anschließend werden die Platten 1,2,3 im Bereich der Fügenähte 10,11 miteinander gasdicht verschweißt. Erforderlichenfalls wird dazu die Schweißnaht 14 durch Mehrlagenschweißen aus mehreren übereinander gelegten Schweißraupen gebildet.

Das derart verschweißte Plattenpaket 4 wird im vorgewärmten Zustand in einen hier nicht dargestellten Hubbalkenofen gesetzt und dort auf eine Warmwalzanfangstemperatur von 1250 °C erwärmt. Nach der Wiedererwärmung wird das erwärmte Plattenpaket 4 nach einem fest vorgegebenen Stichplan in mehreren Stichen auf eine Enddicke D_{W} von 4,5 mm fertig warmgewalzt. Die Verbindung zwischen den Lagen A und M des erhaltenen Warmbands W wird durch das stoffschlüssige Verschweißen und mechanisch formschlüssige Verzahnen der Verbundpartner beim Warmwalzen erzielt. Bei dieser Stahlkombination läuft im Anschluss an den Walzprozess eine Diffusion des Kohlenstoffs vom höher zum niedriger legierten Werkstoff ab. Die Gesamtdicke D_{W} des Warmbands W beträgt 4,5 mm, wobei der Anteil der Dicke Da_{W} der Außenlagen A des Warmbands W jeweils wiederum 10 % an der Gesamtdicke D_{W} beträgt, während die restlichen 80 % der Gesamtdicke D_{W} von der Mittellage G eingenommen werden. Die Breite B des Coils C beträgt wiederum 980 mm bei einer Gesamtlänge des Warmbands von etwa 330 m.

Erforderlichenfalls kann das in der Gesamtdicke D_{W} aus der nicht dargestellten Warmwalzstraße tretende plattierte Warmband W einer gesteuerten Abkühlung unterzogen werden. Anschließend oder unmittelbar auf das Warmwalzen folgend wird das erhaltene plattierte Warmband W zu einem Coil C gewickelt. In Form dieses Coils C kann das Band einer Weiterverarbeitung zugeführt werden, bei dem das Warmband von dem Coil C gewickelt wird und beispielsweise durch Kaltwalzen zu einem plattierten Kaltband oder durch Kaltumformen zu einem Bauteil umgeformt wird. Aus dem so erzeugten Halbzeug lassen sich beispielsweise Lagerhülsen oder Motorenkomponenten wie Ventiltassen erzeugen, die eine verschleißfeste Oberfläche benötigen. Besonders positiv wirkt sich dabei der Effekt aus, dass aufgrund der zuvor durch das Walzplattieren eingestellten Werkstoffeigenschaften weitestgehend auf eine aufwändige Einzelstückaufhärtung verzichtet werden kann.

Aus dem Warmband W entnommene, metallographisch und mittels Ultraschall untersuchte Proben wiesen bis auf den Bereich der Bandkanten keinerlei Lunker auf. Grobe Verunreinigungen in der Grenzschicht traten nicht auf. Einige der aus dem Warmband W gewonnenen Proben wurden kaltgewalzt und nach dem Glühen Tiefungstests unterzogen, die in allen Fällen erfolgreich waren.

Neben dem voranstehend erläuterten Ausführungsbeispiel kann das in erfindungsgemäßer Weise gebildete mehrlagige Paket auch derart gestaltet sein, dass der verschleißfeste Stahl als Grundwerkstoff und der gut umformbare Stahl als Auflagewerkstoff dient. Es lassen sich ebenfalls auch 2- oder mehr als 3-lagige Verbünde erzeugen.

Die Anwendungspalette der Stahlkombination umfasst sämtliche denkbaren Stahlgüten. Insbesondere werden hier noch einmal hoch kohlehaltige Stähle, rost-, säure- und hitzebeständige Stähle sowie sonstige Sonderstähle bis hin zu Ni-Basis-Legierungen genannt.

### BEZUGSZEICHEN

- 1,2,3: Platten
- 4: Plattenpaket
- 5,6,7,8: Flächen der Platten 1,2,3
- 9: Anfasung
- 10,11: Fügenähte
- 12: Kehle
- 13: Spannrahmen
- 14: Schweißnaht

- A: Außenlagen des Warmbands W
- B: Breite der Platten 1,2,3
- C: Coil
- D: Gesamtdicke des Plattenpakets 4
- D_{A}: Dicke der Platten 1,3
- Da_{W}: Dicke der Außenlagen A des Warmbands W
- D_{M}: Dicke der Platte 2
- D_{W}: Dicke des Warmbands W
- M: Mittellage des Warmbands W
- L: Länge der Platten 1,2,3
- W: Warmband

## Patentansprüche

1. Verfahren zum Herstellen von walzplattiertem Warmband (W), bei dem
- mindestens zwei im Wesentlichen quaderförmige Platten (1,2,3) aus jeweils einem anderen Stahlwerkstoff erzeugt werden, die dazu bestimmt sind, aufeinander gelegt zu werden,
- die auf ihren im aufeinander gelegten Zustand einander zugeordneten Oberflächen (5,6,7,8) der Platten (1,2,3) einer abtragenden Oberflächenbehandlung unterzogen werden, um die Oberflächenform der einen Platte (1,2,3) an die Oberflächenform der anderen Platte (1,2,3) derart anzupassen, dass die beiden Oberflächen (5,6,7,8) bei aufeinander liegenden Platten (1,2,3) im Wesentlichen dicht aufeinander liegen, dass die Oberflächen von unerwünschten Fremdpartikeln wie Zunder befreit werden und dass die Oberflächen chemisch-physikalisch aktiviert werden,
- die Platten (1,2,3) mit ihren oberflächenbehandelten Oberflächen (5,6,7,8) aufeinander gelegt werden,
- die aufeinander liegenden Platten (1,2,3) miteinander zu einem Plattenpaket (4) verschweißt werden,
- das Plattenpaket (4) auf eine Warmwalzanfangstemperatur erwärmt wird,
- das erwärmte Plattenpaket (4) zu einem coilfähigen walzplattierten Warmband (W) warmgewalzt wird, und
- das walzplattierte Warmband (W) zu einem Coil (C) gehaspelt wird
**dadurch gekennzeichnet,**
**dass** das Plattenpaket (4) vor dem Verschweißen auf eine Schweiß-Vorwärmtemperatur erwärmt wird.

2. Verfahren nach Anspruch 1, **dadurch gekennzeichnet, dass** die Platten (1,2,3) aus einem Vorband geschnitten werden.

3. Verfahren nach Anspruch 1, **dadurch gekennzeichnet, dass** die Platten (1,2,3) Brammen sind.

4. Verfahren nach einem der voranstehenden Ansprüche, **dadurch gekennzeichnet, dass** die Oberflächen (5,6,7,8) der Platten (1,2,3) bei der abtragenden Oberflächenbehandlung gebeizt werden.

5. Verfahren nach einem der voranstehenden Ansprüche, **dadurch gekennzeichnet, dass** die Oberflächen (5,6,7,8) der Platten (1,2,3) bei der abtragenden Oberflächenbehandlung gebürstet werden.

6. Verfahren nach einem der voranstehenden Ansprüche, **dadurch gekennzeichnet, dass** die Oberflächen (5,6,7,8) der Platten (1,2,3) bei der abtragenden Oberflächenbehandlung geschliffen werden.

7. Verfahren nach einem der voranstehenden Ansprüche, **dadurch gekennzeichnet, dass** die Oberflächen (5, 6, 7, 8 ) der Platten (1,2,3) bei der abtragenden Oberflächenbehandlung kugelgestrahlt werden.

8. Verfahren nach einem der voranstehenden Ansprüche, **dadurch gekennzeichnet, dass** die Oberflächen (5,6,7,8) der Platten (1,2,3) bei der abtragenden Oberflächenbehandlung gehobelt werden.

9. Verfahren nach einem der voranstehenden Ansprüche, **dadurch gekennzeichnet, dass** die Oberflächen (5,6,7,8) der Platten (1,2,3) bei der abtragenden Oberflächenbehandlung gefräst werden.

10. Verfahren nach einem der voranstehenden Ansprüche, **dadurch gekennzeichnet, dass** die Platten (1,2,3) durch die abtragende Oberflächenbehandlung im Wesentlichen plane Oberflächen (5,6,7,8) erhalten.

11. Erfahren nach einem der voranstehenden Ansprüche, **dadurch gekennzeichnet, dass** die aufeinander liegenden Platten (1,2,3) des Plattenpakets (4) vor und während des Schweißens gegeneinander gepresst werden.

12. Verfahren nach einem der voranstehenden Ansprüche, **dadurch gekennzeichnet, dass** die Ränder der einander zugeordneten Oberflächen (5,6,7,8) der Platten (1,2,3) mindestens im Bereich der Abschnitte angefast werden, in denen anschließend die Verschweißung erfolgt.

13. Verfahren nach einem der voranstehenden Ansprüche, **dadurch gekennzeichnet, dass** die Platten (1,2,3) des Plattenpakets (4) gasdicht miteinander verschweißt werden.

14. Verfahren nach einem der voranstehenden Ansprüche, **dadurch gekennzeichnet, dass** das Plattenpaket (4) vor dem Warmwalzen auf eine im Bereich von 1100 - 1300 °C liegende Wiedererwärmungstemperatur erwärmt wird.

15. Verfahren nach einem der voranstehenden Ansprüche, **dadurch gekennzeichnet, dass** die Dicke (D_{W}) des aus dem Plattenpaket (4) gewalzten Warmbands (W) weniger als 6 mm beträgt.

16. Verfahren nach einem der voranstehenden Ansprüche, **dadurch gekennzeichnet, dass** das Warmband (W) einen mindestens dreilagigen Aufbau aufweist, wobei die jeweils außen liegenden Lagen (A) dasselbe Eigenschaftsprofil besitzen.

## Claims

1. Method for the manufacture of hot strip (W) clad by rolling, wherein
- at least two essentially parallelepiped-shaped plates (1, 2, 3) are produced in each case from a different steel material, which are intended to be laid on one another,
- the surfaces (5, 6, 7, 8), allocated to one another in their state laid on one another, of the plates (1, 2, 3), are subjected to a material-removing surface treatment in order to adapt the surface shape of the one plate (1, 2, 3) to the surface shape of the other plate (1, 2, 3) in such a way that the two surfaces (5, 6, 7, 8) lie essentially tight on one another when the plates (1, 2, 3) are lying on one another, that the surfaces are freed of unwanted foreign particles such as scale and that the surfaces are chemically-physically activated,
- the plates (1, 2, 3) are laid with their surface-treated surfaces (5, 6, 7, 8) on one another,
- the plates (1, 2, 3) lying on one another are welded to one another to form a plate packet (4),
- the plate packet (4) is heated to a hot-rolling start temperature,
- the heated plate packet (4) is hot-rolled to hot strip (W) clad by rolling, capable of being formed into a coil, and
- the hot strip (W) clad by rolling is coiled to form a coil (C),
**characterised in that**
the plate packet (4) is heated before welding to a welding pre-heat temperature.

2. Method according to Claim 1, **characterised in that** the plates (1, 2, 3) are cut out of a roughed strip.

3. Method according to Claim 1, **characterised in that** the plates (1, 2, 3) are slabs.

4. Method according to any one of the preceding claims, **characterised in that** the surfaces (5, 6, 7, 8) of the plates (1, 2, 3) are pickled during the material-removing surface treatment.

5. Method according to any one of the preceding claims, **characterised in that** the surfaces (5, 6, 7, 8) of the plates (1, 2, 3) are brushed during the material-removing surface treatment.

6. Method according to any one of the preceding claims, **characterised in that** the surfaces (5, 6, 7, 8) of the plates (1, 2, 3) are ground during the material-removing surface treatment.

7. Method according to any one of the preceding claims, **characterised in that** the surfaces (5, 6, 7, 8) of the plates (1, 2, 3) are shot-blasted during the material-removing surface treatment.

8. Method according to any one of the preceding claims, **characterised in that** the surfaces (5, 6, 7, 8) of the plates (1, 2, 3) are planed during the material-removing surface treatment.

9. Method according to any one of the preceding claims, **characterised in that** the surfaces (5, 6, 7, 8) of the plates (1, 2, 3) are milled during the material-removing surface treatment.

10. Method according to any one of the preceding claims, **characterised in that** the plates (1, 2, 3) obtain essentially flat surfaces (5, 6, 7, 8) through the material-removing surface treatment.

11. Method according to any one of the preceding claims, **characterised in that** the plates (1, 2, 3) of the plate package (4) lying on one another are pressed against one another before and during the welding.

12. Method according to any one of the preceding claims, **characterised in that** the edges of the surfaces (5, 6, 7, 8) of the plates (1, 2, 3) are chamfered at least in the area of the sections in which the welding subsequently takes place.

13. Method according to any one of the preceding claims, **characterised in that** the plates (1, 2, 3) of the plate package (4) are welded to one another gas-tight.

14. Method according to any one of the preceding claims, **characterised in that** the plate package (4) is heated before the hot-rolling to a reheating temperature lying in the range from 1100 - 1300°C.

15. Method according to any one of the preceding claims, **characterised in that** the thickness (D_{W}) of the hot strip (W) rolled from the plate package (4) is less than 6 mm.

16. Method according to any one of the preceding claims, **characterised in that** the hot strip (W) has a structure of at least three layers, wherein the layers (A) lying on the outside in each case possess the same characteristics profile.

## Revendications

1. Procédé de préparation de bandes à chaud fixées par laminage (W), dans lequel
- au moins deux plaques essentiellement quadratiques (1, 2, 3), chaque fois en un autre matériau en acier, sont produites, qui sont destinées à être placées l'une sur l'autre,
- les surfaces rattachées l'une à l'autre en l'état superposé (5, 6, 7, 8) des plaques (1, 2, 3) sont soumises à un traitement d'usure des surfaces , pour ajuster la forme de la surface d'une plaque (1, 2, 3) à la forme de surface de l'autre plaque (1, 2, 3) de sorte que les deux surfaces (5, 6, 7, 8) se trouvent essentiellement très voisines lorsque les plaques (1, 2, 3) sont superposées, de sorte que les surfaces soient libres de particules étrangères non souhaitées, comme des battitures, et que les surfaces soient activées de manière chimico-physique,
- les plaques (1, 2, 3) sont posées l'une sur l'autre par leurs surfaces traitées (5, 6, 7, 8),
- les plaques (1, 2, 3) superposées sont soudées l'une à l'autre en un paquet de plaques (4),
- le paquet de plaques (4) est chauffé jusqu'à une température initiale de laminage à chaud,
- le paquet de plaques (4) chauffé est laminé à chaud en une bande à chaud (W) fixée par laminage, bobinable, et
- la bande à chaud (W) fixée par laminage est enroulée sur une bobine (C),
**caractérisé en ce que** le paquet de plaques (4) est chauffé avant le soudage à une température de préchauffage du soudage.

2. Procédé selon la revendication 1, **caractérisé en ce que** les plaques (1, 2, 3) sont découpées en une prébande.

3. Procédé selon la revendication 1, **caractérisé en ce que** les plaques (1, 2, 3) sont des brames.

4. Procédé selon l'une quelconque des revendications précédentes, **caractérisé en ce que** les surfaces (5, 6, 7, 8) des plaques (1, 2, 3) sont décapées lors du traitement d'usure des surfaces.

5. Procédé selon l'une quelconque des revendications précédentes, **caractérisé en ce que** les surfaces (5, 6, 7, 8) des plaques (1, 2, 3) sont brossées lors du traitement d'usure des surfaces.

6. Procédé selon l'une quelconque des revendications précédentes, **caractérisé en ce que** les surfaces (5, 6, 7, 8) des plaques (1, 2, 3) sont polies lors du traitement d'usure des surfaces.

7. Procédé selon l'une quelconque des revendications précédentes, **caractérisé en ce que** les surfaces (5, 6, 7, 8) des plaques (1, 2, 3) sont grenaillées lors du traitement d'usure des surfaces.

8. Procédé selon l'une quelconque des revendications précédentes, **caractérisé en ce que** les surfaces (5, 6, 7, 8) des plaques (1, 2, 3) sont rabotées lors du traitement d'usure des surfaces.

9. Procédé selon l'une quelconque des revendications précédentes, **caractérisé en ce que** les surfaces (5, 6, 7, 8) des plaques (1, 2, 3) sont fraisées lors du traitement d'usure des surfaces.

10. Procédé selon l'une quelconque des revendications précédentes, **caractérisé en ce que** les plaques (1, 2, 3) obtiennent des surfaces essentiellement planes par le traitement d'usure des surfaces.

11. Procédé selon l'une quelconque des revendications précédentes, **caractérisé en ce que** les plaques (1, 2, 3) superposées du paquet de plaques (4) sont pressées l'une contre l'autre avant et pendant le soudage.

12. Procédé selon l'une quelconque des revendications précédentes, **caractérisé en ce que** les bords des surfaces (5, 6, 7, 8) orientées l'une vers l'autre des plaques (1, 2, 3) sont biseautés au moins au niveau des parties où le soudage se fera ensuite.

13. Procédé selon l'une quelconque des revendications précédentes, **caractérisé en ce que** les plaques (1, 2, 3) du paquet de plaques (4) sont soudées l'un à l'autre de manière étanche aux gaz.

14. Procédé selon l'une quelconque des revendications précédentes, **caractérisé en ce que** le paquet de plaques (4) est chauffé avant le laminage à chaud, jusqu'à une température de réchauffage située dans l'intervalle allant de 1100 à 1300°C.

15. Procédé selon l'une quelconque des revendications précédentes, **caractérisé en ce que** l'épaisseur (D_{W}) du paquet de plaques (4) de la bande à chaud (W) laminée se situe à une valeur de moins de 6 mm.

16. Procédé selon l'une quelconque des revendications précédentes, **caractérisé en ce que** la bande à chaud (W) présente une structure au moins à trois couches, où les couches (A) les plus extérieures possèdent le même profil de propriétés.
